(19) Europäisches Patentamt
European Patent Office
Office européen des brevets

(11) **EP 4 657 907 A1**

(12) **EUROPEAN PATENT APPLICATION**
published in accordance with Art. 153(4) EPC

(43) Date of publication:
**03.12.2025 Bulletin 2025/49**

(21) Application number: **23922446.2**

(22) Date of filing: **30.11.2023**

(51) International Patent Classification (IPC):
**H04W 12/02** (2009.01)

(52) Cooperative Patent Classification (CPC):
**H04W 12/02; H04W 16/22**

(86) International application number:
**PCT/CN2023/135611**

(87) International publication number:
**WO 2024/169330 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2023 CN 202310159238**

(71) Applicant: **Huawei Technologies Co., Ltd.**
**Shenzhen, Guangdong 518129 (CN)**

(72) Inventors:
• **GENG, Tingting**
**Shenzhen, Guangdong 518129 (CN)**
• **ZENG, Yu**
**Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD, COMMUNICATION APPARATUS, AND COMMUNICATION SYSTEM**

(57) This application provides a communication method, a communication apparatus, and a communication system. In the method, a network device obtains model subscription information of a terminal device and configuration restriction information of a first model, where the model subscription information indicates a model that is allowed to be configured for the terminal device, the configuration restriction information indicates a terminal device that is allowed to be configured with the first model, and the first model is an AI model; and determines, based on the model subscription information and the configuration restriction information, whether the terminal device is allowed to be configured with the first model. This solution introduces the configuration restriction information of the model, satisfying privacy requirements for model configuration or model usage, and helping enhance model security.

FIG. 3

**Description**

CROSS-REFERENCE TO RELATED APPLICATIONS

This application claims priority to Chinese Patent Application No. 202310159238.8, filed with the China National Intellectual Property Administration on February 14, 2023 and entitled "COMMUNICATION METHOD, COMMUNICATION APPARATUS, AND COMMUNICATION SYSTEM", which is incorporated herein by reference in its entirety.

TECHNICAL FIELD

This application relates to the field of wireless communication technologies, and in particular, to a communication method, a communication apparatus, and a communication system.

BACKGROUND

Artificial intelligence (artificial intelligence, AI) is a technology for performing complex computation by simulating the human brain. With improvement of data storage and computing capabilities, AI has found increasing applications. The 3rd generation partnership project (3rd generation partnership project, 3GPP) has proposed to apply AI to wireless communication systems, including terminal devices, network devices, and other devices. Within life cycle management (life cycle management, LCM) of AI functions, data can be intelligently collected and analyzed to train and/or optimize AI models, to improve inference accuracy and computational speed of AI models, and improve network performance and user experience.

Prior to deployment of AI models, the life cycle management may further include a model registration procedure. After model training, a resulting model is registered with a model management network element for subsequent management of model operations. These model operations may include at least one of the following: model transmission, model deployment, model configuration, model activation/deactivation, or other model operations.

In consideration of privacy issues related to the model, it is necessary to implement restriction mechanisms for model configurations after model registration. However, there is no corresponding solution currently.

SUMMARY

This application provides a communication method, a communication apparatus, and a communication system, to protect privacy of models.

According to a first aspect, an embodiment of this application provides a communication method. The method may be performed by a network device or an apparatus used in the network device, for example, a chip. The method includes: obtaining model subscription information of a terminal device and configuration restriction information of a first model, where the model subscription information indicates a model that is allowed to be configured for the terminal device, the configuration restriction information indicates a terminal device that is allowed to be configured with the first model, and the first model is an AI model; and determining, based on the model subscription information and the configuration restriction information, whether the terminal device is allowed to be configured with the first model.

In the foregoing solution, the configuration restriction information of the model is introduced. This can satisfy privacy requirements of model configuration or model usage, and help enhance model security.

In a possible implementation method, the determining, based on the model subscription information and the configuration restriction information, whether the terminal device is allowed to be configured with the first model includes: when the terminal device indicated by the configuration restriction information includes the terminal device, and the model indicated by the model subscription information includes the first model, determining that the terminal device is allowed to be configured with the first model.

In a possible implementation method, the method further includes: receiving indication information from the terminal device, where the indication information indicates that the terminal device has been configured with the first model and/or a state of the first model, and the state is an active state or an inactive state; or the indication information indicates that the terminal device has not been configured with the first model.

In the foregoing solution, the terminal device notifies the network device of a deployment case of the terminal device on the first model. This helps the network device correctly manage deployment of the terminal device on the first model.

In a possible implementation method, when the terminal device is allowed to be configured with the first model and the terminal device has not been configured with the first model, the method further includes: sending model information of the first model to the terminal device.

In a possible implementation method, the model information includes model identification information and model management information. The model identification information includes identification information of the first model and/or identification information of a model function of the first model; and the model management information includes model running information of the first model and/or model feature information of the first model.

In a possible implementation method, when the terminal device is allowed to be configured with the first model, and the terminal device has been configured with the first model but has not activated the first model, the method further includes: sending an activation indication to the terminal device, where the activation indication indicates to activate the first model.

In a possible implementation method, the configuration restriction information includes at least one of the following information: information about at least one terminal device, information about at least one terminal device manufacturer, or information about at least one chip manufacturer.

According to a second aspect, an embodiment of this application provides a communication method. The method may be performed by a model management network element or an apparatus used in the model management network element, for example, a chip. The method includes: receiving a request message from a terminal device, where the request message is for requesting to register a first model with the model management network element, and the first model is an AI model; and sending configuration restriction information of the first model to a network device, where the configuration restriction information indicates a terminal device that is allowed to be configured with the first model.

In the foregoing solution, the configuration restriction information of the model is introduced. This can satisfy privacy requirements of model configuration or model usage, and help enhance model security.

In a possible implementation method, the method further includes: determining the configuration restriction information.

In a possible implementation method, the request message includes indication information, and the indication information indicates that the first model has a usage range; and determining the configuration restriction information includes: determining the configuration restriction information based on the indication information.

In the foregoing solution, the terminal device sends, to the model management network element, the indication information indicating that the first model has the usage range, to trigger the model management network element to determine the configuration restriction information of the first model. This helps protect privacy of the first model.

In a possible implementation method, the method further includes: generating, for the first model, model identification information of the first model, where the model identification information identifies the first model.

In the foregoing solution, the first model is identified based on the model identification information, and this helps accurately manage the first model.

In a possible implementation method, the method further includes: sending the model identification information to the network device.

In a possible implementation method, the model identification information includes identification information of the first model and/or identification information of a model function of the first model.

In a possible implementation method, the request message includes model management information of the first model, and the model management information includes model running information of the first model and/or model feature information of the first model.

In a possible implementation method, the configuration restriction information includes at least one of the following information: information about at least one terminal device, information about at least one terminal device manufacturer, or information about at least one chip manufacturer.

According to a third aspect, an embodiment of this application provides a communication method. The method may be performed by a terminal device or an apparatus used in the terminal device, for example, a chip. The method includes: sending a request message to a model management network element, where the request message is for requesting to register a first model with the model management network element, and the first model is an AI model; and receiving model identification information of the first model from the model management network element, where the model identification information identifies the first model.

In the foregoing solution, the terminal device may register the first model with the model management network element, and this helps the model management network element better maintain related information of the first model.

In a possible implementation method, the method further includes: establishing an association between the model identification information and model management information of the first model.

In a possible implementation method, the request message includes the model management information.

In a possible implementation method, the model management information includes model running information of the first model and/or model feature information of the first model.

In a possible implementation method, the model identification information includes identification information of the first model and/or identification information of a model function of the first model.

In a possible implementation method, the request message includes indication information, and the indication information indicates that the first model has a usage range.

In the foregoing solution, the terminal device sends, to the model management network element, the indication information indicating that the first model has the usage range, to trigger the model management network element to determine configuration restriction information of the first model. This helps protect privacy of the first model.

In a possible implementation method, the indication information indicates that a terminal device of a same manufacturer as the terminal device is allowed to be configured with the first model; or the indication information indicates that a terminal device corresponding to a same chip manufacturer as the terminal device is allowed to be configured with the first model.

In a possible implementation method, the configuration restriction information includes at least one of the following information: information about at least one terminal device, information about at least one terminal device manufacturer, or information about at least one chip manufacturer.

According to a fourth aspect, an embodiment of this application provides a communication apparatus. The apparatus may be a network device, or may be a module (for example, a chip) used in the network device. The apparatus has a function of implementing any implementation method in the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a model management network element, or may be a module (for example, a chip) used in the model management network element. The apparatus has a function of implementing any implementation method in the second aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a terminal device, or may be a module (for example, a chip) used in the terminal device. The apparatus has a function of implementing any implementation method in the third aspect. The function may be implemented by hardware, or may be implemented by hardware executing corresponding software. The hardware or the software includes one or more modules corresponding to the function.

According to a seventh aspect, an embodiment of this application provides a communication apparatus, including a processor and a memory. The memory is configured to store computer instructions. When the apparatus runs, the processor executes the computer instructions stored in the memory, to enable the apparatus to perform any implementation method in the first aspect to the third aspect.

According to an eighth aspect, an embodiment of this application provides a communication apparatus, including a unit or a means (means) configured to perform steps of any implementation method in the first aspect to the third aspect.

According to a ninth aspect, an embodiment of this application provides a communication apparatus, including a processor and an interface circuit. The processor is configured to communicate with another apparatus through the interface circuit, and perform any implementation method in the first aspect to the third aspect. There are one or more processors.

According to a tenth aspect, an embodiment of this application provides a communication apparatus, including a processor coupled to a memory. The processor is configured to invoke a program stored in the memory, to perform any implementation method in the first aspect to the third aspect. The memory may be located inside or outside the apparatus. In addition, there may be one or more processors.

According to an eleventh aspect, an embodiment of this application further provides a computer-readable storage medium, where the computer-readable storage medium stores instructions. When the instructions are run on a communication apparatus, any implementation method in the first aspect to the third aspect is performed.

According to a twelfth aspect, an embodiment of this application further provides a computer program product. The computer program product includes a computer program or instructions. When the computer program or the instructions are run by a communication apparatus, any implementation method in the first aspect to the third aspect is performed.

According to a thirteenth aspect, an embodiment of this application further provides a chip system, including a processor configured to perform any implementation method in the first aspect or the third aspect.

According to a fourteenth aspect, an embodiment of this application further provides a communication system, including a network device configured to perform any implementation method in the first aspect and a model management network element configured to perform any implementation method in the second aspect.

According to a fifteenth aspect, an embodiment of this application further provides a communication method, including: A model management network element receives a request message from a terminal device, where the request message is for requesting to register a first model with the model management network element, and the first model is an AI model; the model management network element sends configuration restriction information of the first model to a network device, where the configuration restriction information indicates a terminal device that is allowed to be configured with the first model; the network device receives the configuration restriction information, and obtains model subscription information of the terminal device, where the model subscription information indicates a model that is allowed to be configured for the terminal device; and the network device determines, based on the model subscription information and the configuration restriction information, whether the terminal device is allowed to be configured with the first model.

## BRIEF DESCRIPTION OF DRAWINGS

FIG. 1(a) is a diagram of an architecture of a communication system to which an embodiment of this application is applied;

FIG. 1(b) is a diagram of a network device;

FIG. 1(c) is a diagram of a communication system according to an embodiment of this application;

FIG. 2(a) is a diagram of a structure of a neuron;

FIG. 2(b) is a diagram of a layer relationship of a neural network;

FIG. 3 is a schematic flowchart of a communication method according to an embodiment of this application;

FIG. 4 is a schematic flowchart of a communication method according to an embodiment of this application;

FIG. 5 is a diagram of a structure of a communication apparatus according to an embodiment of this application; and

FIG. 6 is a diagram of a structure of a communication apparatus according to an embodiment of this application.

## DESCRIPTION OF EMBODIMENTS

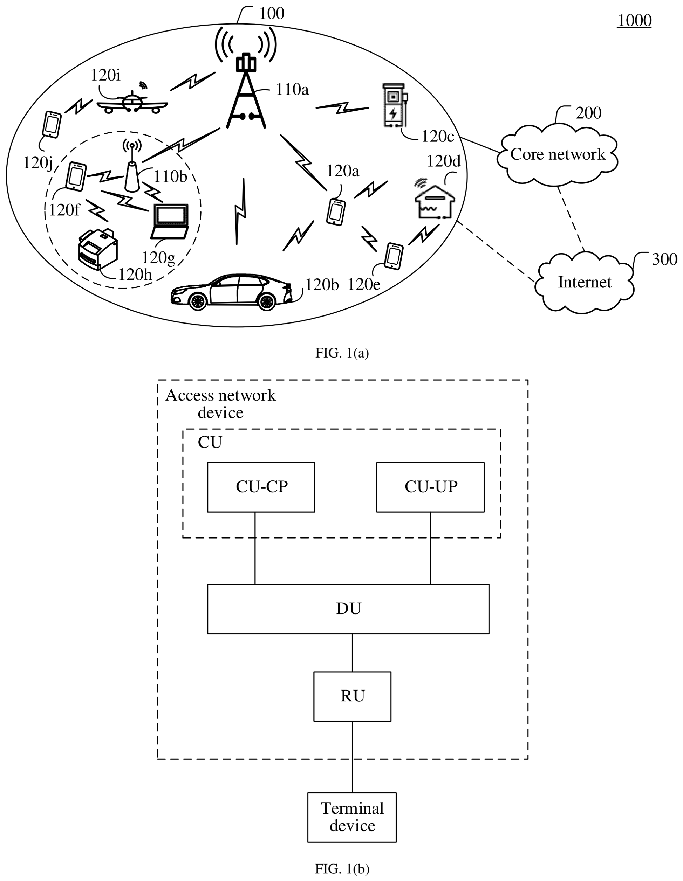

FIG. 1(a) is a diagram of an architecture of a communication system to which an embodiment of this application is applied. The communication system 1000 shown in FIG. 1(a) includes an access network 100 and a core network 200. For example, the communication system 1000 further includes an internet 300. The access network 100 may include at least one access network device (for example, 110a and 110b in FIG. 1(a)), and may further include at least one terminal device (for example, 120a to 120j in FIG. 1(a)). The terminal device is connected to the access network device in a wireless manner, and the access network device is connected to the core network in a wireless or wired manner. A core network device and the access network device may be independent and different physical devices, or functions of the core network device and logical functions of the access network device may be integrated into a same physical device, or a part of functions of the core network device and a part of functions of the access network device may be integrated into one physical device. Mutual connections between terminal devices and between access network devices may be implemented in a wired or wireless manner. FIG. 1(a) is only a diagram. The communication system may further include other access network devices, for example, may further include a wireless relay device and a wireless backhaul device, which are not shown in FIG. 1(a).

The access network device is an access device accessed by a terminal device into a communication system in a wired or wireless manner. The access network device may be a base station (base station), and includes, for example, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, and an access node in a wireless fidelity (wireless fidelity, Wi-Fi) system; or may be a module or a unit that completes a part of functions of the base station, for example, may be a central unit (central unit, CU), or may be a distributed unit (distributed unit, DU). The CU herein performs functions of a radio resource control protocol layer and a packet data convergence protocol (packet data convergence protocol, PDCP) layer of the base station, and may further performs functions of a service data adaptation protocol (service data adaptation protocol, SDAP) layer. The DU completes functions of a radio link control layer and a medium access control (medium access control, MAC) layer of the base station, and may further complete a part or all of functions of a physical layer. For specific descriptions of the foregoing protocol layers, refer to related technical specifications in 3GPP. The access network device may be a macro base station (for example, 110a in FIG. 1(a)), or may be a micro base station or an indoor base station (for example, 110b in FIG. 1(a)), or may be a relay node, a donor node, or the like. A specific technology and a specific device form that are used by the access network device are not limited in embodiments of this application.

The terminal device is a device having a wireless transceiver function, and may send a signal to the access network device, or receive a signal from the access network device. The terminal device includes but is not limited to a terminal apparatus, a terminal, user equipment (user equipment, UE), a mobile station, a mobile terminal, and the like. The terminal device may be widely used in various scenarios, such as device-to-device (device-to-device, D2D), vehicle-to-everything (vehicle-to-everything, V2X) communication, machine-type communication (machine-type communication, MTC), the internet of things (internet of things, IoT), virtual reality, augmented reality, industrial control, self-driving, telemedicine, a smart grid, smart furniture, a smart office, smart wearable, smart transportation, and a smart city. The terminal device may be specifically a mobile phone, a tablet computer, a computer with a wireless transceiver function, a wearable device, a vehicle, an airplane, a ship, a robot, a robotic arm, a smart home device, or the like. A specific technology and a specific device form that are used by the terminal device are not limited in embodiments of this application.

The access network device and the terminal device may be at fixed positions or may be movable. The access network device and the terminal device may be deployed on the land, including an indoor or outdoor device, a handheld device, or a vehicle-mounted device; may be deployed on a water surface; or may be deployed on an airplane, a balloon, and an artificial satellite in the air. Application scenarios of the access network device and the terminal device are not limited in embodiments of this application.

Roles of the access network device and the terminal device may be relative. For example, a helicopter or an uncrewed aerial vehicle 120i in FIG. 1(a) may be configured as a mobile access network device, and for a terminal device 120j accessing the access network 100 through 120i, the terminal device 120i is an access network device. However, for a first access network device 10a, 120i is a terminal device. In other words, communication between 110a and 120i is performed through a radio air interface protocol. Certainly, communication between 110a and 120i may alternatively be performed through an interface protocol between access network devices. In this case, for 110a, 120i is also an access network device. Therefore, both the access network device and the terminal device may be collectively referred to as communication apparatuses, 110a and 110b each in FIG. 1(a) may be referred to as a communication apparatus having a function of an access network device, and 120a to 120j each in FIG. 1(a) may be referred to as a communication apparatus having a function of a terminal device.

Communication between the access network device and the terminal device, between access network devices, or between terminal devices may be performed over a licensed spectrum, or may be performed over an unlicensed spectrum, or may be performed over both a licensed spectrum and an unlicensed spectrum. Communication may be performed over a spectrum below 6 gigahertz (gigahertz, GHz), or may be performed over a spectrum above 6 GHz, or may be performed over both a spectrum below 6 GHz and a spectrum above 6 GHz. A spectrum resource used for wireless communication is not limited in embodiments of this application.

In embodiments of this application, a function of the access network device may alternatively be performed by a module (for example, a chip) in the access network device, or may be performed by a control subsystem including the function of the access network device. The control subsystem including the function of the access network device herein may be a control center in the foregoing application scenarios, such as a smart grid, industrial control, smart transportation, or a smart city. A function of the terminal device may alternatively be performed by a module (for example, a chip or a modem) in the terminal device, or may be performed by an apparatus including the function of the terminal device.

In this application, the access network device sends a downlink signal or downlink information to the terminal device, where the downlink information is carried on a downlink channel. The terminal device sends an uplink signal or uplink information to the access network device, where the uplink information is carried on an uplink channel. To communicate with the access network device, the terminal device needs to establish a wireless connection to a cell controlled by the access network device. The cell that establishes the wireless connection to the terminal device is referred to as a serving cell of the terminal device.

The core network 200 includes one or more core network devices. The core network device includes but is not limited to one or more of the following network elements: an authentication server function (authentication server function, AUSF), unified data management (unified data management, UDM), a unified data repository (unified data repository, UDR), a network repository function (network repository function, NRF), a network exposure function (network exposure function, NEF), an application function (application function, AF), a policy control function (policy control function, PCF), an access and mobility management function (access and mobility management function, AMF), a session management function (session management function, SMF), a user plane function (user plane function, UPF), a binding support function (binding support function, BSF), and a network data analytics function (network data analytics function, NWDAF).

FIG. 1(b) is a diagram of an access network device. As shown in FIG. 1(b), the access network device includes one or more CUs, one or more DUs, and one or more radio units (radio units, RUs). For clarity, FIG. 1(b) shows only one CU, one DU, and one RU. The CU is configured to connect to a core network and one or more DUs. For example, the CU may have a part of functions of the core network. The CU may include a CU-control plane (control plane, CP) and a CU-user plane (user plane, UP).

The CU and the DU may be configured based on protocol layer functions of a wireless network implemented by the CU and the DU. For example, the CU is configured to implement functions of a packet data convergence protocol (packet data convergence protocol, PDCP) layer and functions of a protocol layer above the packet data convergence protocol layer (for example, a radio resource control (radio resource control, RRC) layer and/or a service data adaptation protocol (service data adaptation protocol, SDAP) layer); and the DU is configured to implement functions of a protocol layer below the PDCP layer (for example, a radio link control (radio link control, RLC) layer, a medium access control (medium access control, MAC) layer, and/or a physical (physical, PHY) layer). For another example, the CU is configured to implement functions of a protocol layer above a PDCP layer (for example, an RRC layer and/or an SDAP layer); and the DU is configured to implement functions of a PDCP layer and functions of a protocol layer below the PDCP layer (for example, an RLC layer, a MAC layer, and/or a PHY layer).

The foregoing configurations of the CU and the DU are merely examples, and functions of the CU or the DU may also be configured based on a requirement. For example, the CU or the DU may be configured to have functions of more protocol layers; or the CU or the DU may be configured to have a part of processing functions of protocol layers. For example, a part of functions of the RLC layer and functions of a protocol layer above the RLC layer are set on the CU; and remaining functions of the RLC layer and functions of a protocol layer below the RLC layer are set on the DU. For another example, the functions of the CU or the DU may be divided based on a service type or another system requirement, for example, divided based on a delay. A function whose processing time needs to satisfy a small delay requirement is set on the DU, and a function whose processing time does not need to satisfy the delay requirement is set on the CU.

The DU and the RU may work together to implement functions of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include another part of functions of the physical layer, and the part of functions are closer to an intermediate radio frequency side.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

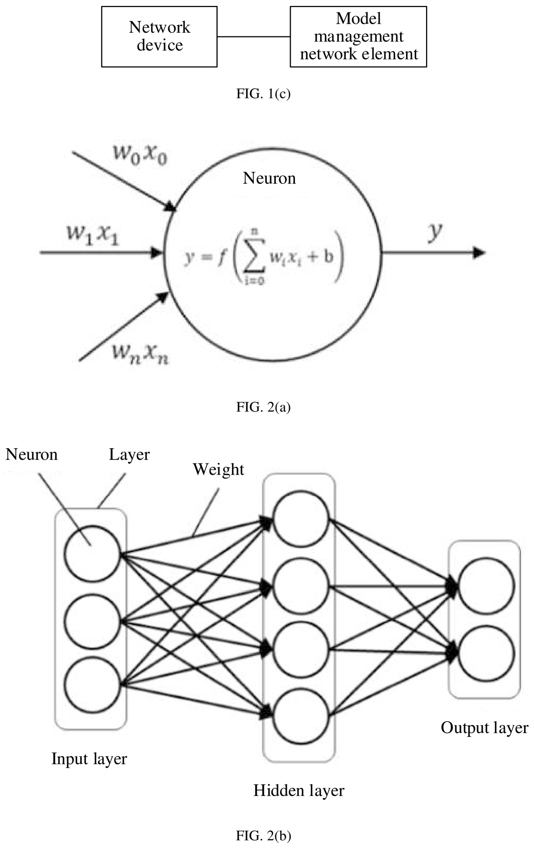

FIG. 1(c) is a diagram of a communication system according to an embodiment of this application. The communication system includes a network device and a model management network element. The network device may be the access network device or the core network device described above. The model management network element is a network element that manages an AI model, or a network element that has an AI model management function. The model management network element may be a terminal device, a network device, an operation, administration and maintenance (operation, administration and management, OAM) device, or a third-party service device. The network device may be the access network device or the core network device described above. The third-party service device may be an application service (over the top, OTT) device or another service provider device that can provide an application service. It may be understood that, the "model" described in this application is an AI model.

In embodiments of this application, one AI model may be deployed only on a network device or a terminal device, or may be deployed on both a network device and a terminal device, or may be simultaneously deployed on three or more devices. The three or more devices may be devices of a same type, where for example, all of the devices are terminal devices or all of the devices are network devices; or may be devices of different types, where for example, one AI model is simultaneously deployed on one network device and two terminal devices. Therefore, the AI model in embodiments of this application is classified into the following types.

1. One-sided model (one-sided model)

The one-sided model is a model deployed only on a network device or a terminal device, and the one-sided model includes a network-sided model (network-sided model, NW-sided model) and a UE-sided model (UE-sided model).

2. Two-sided model (two-sided model)

The two-sided model means that a model is divided into two parts: One part is deployed on a terminal device, and the other part is deployed on a network device. The two parts are used together to complete model functions.

3. Multi-sided model (multi-sided model)

The multi-sided model means that a model is divided into three or more parts. Each part is deployed on a device, and different parts are deployed on different devices. A plurality of devices are used together to complete model functions.

The AI model in embodiments of this application may include various deep neural networks. The neural network is a specific implementation form of machine learning. The neural network can be used for performing a classification task and a prediction task, and can also be used for establishing conditional probability distribution between variables. Common neural networks include a deep neural network (deep neural network, DNN), a generative neural network (generative neural network, GNN), and the like. Based on a network construction manner, the DNN may include a feedforward neural network (feedforward neural network, FNN), a convolutional neural network (convolutional neural network, CNN), a recurrent neural network (recurrent neural network, RNN), and the like. The GNN includes a generative adversarial network (generative adversarial network, GAN) and a variational autoencoder (variational autoencoder, VAE). The neural network is constructed based on a neuron. The following describes a calculation and optimization mechanism of the neural network by using a DNN as an example. It may be understood that, a specific implementation of the neural network is not limited in embodiments of this application. In the DNN, each neuron performs a weighted summation operation on an input value of the neuron, and generates an output of a weighted summation result by using an activation function. FIG. 2(a) is a diagram of a structure of a neuron. It is assumed that an input of the neuron is $x = [x_0, x_1, ... x_n]$, a weight corresponding to the input is $w = [w_0, w_1, ... w_n]$, an offset of weighted summation is b, and forms of the activation function may be diversified. For example, the activation function is $y = f(x) = max\{0, x\}$, and an output of execution of the neuron is

$$y = f(\sum_{i=0}^{n} w_i x_i + b) = max\{0, \sum_{i=0}^{n} w_i x_i + b\},$$

where $w_i x_i$ represents a product of $w_i$ and $x_i$. The DNN generally has a multi-layer structure. Each layer of the DNN may include a plurality of neurons. An input layer processes a received value by using the neuron, and then transfers a processed value to an intermediate hidden layer. Similarly, the hidden layer then transfers a calculation result to a final output layer, to generate a final output of the DNN. FIG. 2(b) is a diagram of a layer relationship of a neural network. The DNN generally has one or more hidden layers, and the hidden layer usually directly affects capabilities of extracting information and fitting a function. Increasing a quantity of hidden layers of the DNN or increasing a quantity of neurons at each layer can improve the capability of fitting a function by the DNN. Parameters of each neuron include a weight, an offset, and an activation function. A set including parameters of neurons in the DNN is referred to as a DNN parameter (also referred to as a neural network parameter). The weight and the offset of the neuron may be optimized in a training process, so that the DNN has capabilities of extracting a data feature and expressing a mapping relationship.

An AI model parameter includes information related to the neural network. For example, the AI model parameter may include one or more of the following content:

(1) model architecture information, which may also be referred to as information related to a neural network structure, such as a type of a neural network (for example, the deep neural network or the generative neural network), a quantity of layers of the neural network, or a quantity of neurons;
(2) a model parameter, which may also be referred to as a connection manner of neurons or network layers; and
(3) a neuron parameter, which may be understood as parameters of each neuron in a neural network, such as a weight, an offset, and an activation function.

To protect privacy of the model, this application provides corresponding solutions. "Privacy" herein means restricting use of a model to a device within a specific range, that is, ensuring that the model is not used by a device beyond the range.

It may be understood that, the method provided in this application may be performed by a network device, a model management network element, and a terminal device, or may be performed by a module (for example, a chip) used in the network device, the model management network element, and the terminal device. The following describes a communication method provided in this application by using the network device, the model management network element, and the terminal device as execution entities.

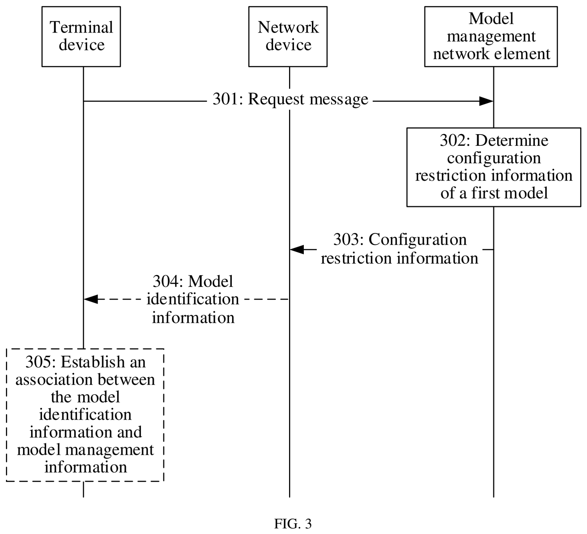

FIG. 3 is a schematic flowchart of a communication method according to an embodiment of this application. The method includes the following steps.

Step 301: A terminal device sends a request message to a model management network element. Correspondingly, the model management network element receives the request message.

It may be understood that, the terminal device may access a network device, and the terminal device sends the request message to the model management network element via the network device. For example, the network device and the model management network element are applicable to the communication system described in FIG. 1(c).

The request message is for requesting to register a first model with the model management network element. The first model may be obtained by the terminal device through training, or may be obtained by a model provider through training and provided for the terminal device. The first model is an AI model.

The model provider may train the first model and obtain model management information of the first model. The model provider may be a network device, an OAM device, another terminal device, or a third-party service device. The model provider and the model management network element are different devices. It should be noted that, if a model is trained by the terminal device, that the terminal device trains the model may be understood as that model training is performed by at least one of the terminal device, a terminal device manufacturer, or a chip manufacturer of the terminal device.

For example, the request message includes the model management information of the first model, and the model management information of the first model includes model running information of the first model and/or model feature information of the first model. The model running information includes at least one of the following information: model architecture information (for example, at least one of a type of a neural network, a quantity of layers of the neural network, or a quantity of neurons) of the first model, at least one model parameter (for example, a connection manner of neurons or network layers) of the first model, a neuron parameter (for example, at least one of a weight, an offset, or an activation function) of at least one model layer of the first model, model function information of the first model, manufacturer information (for example, information about a manufacturer that provides the first model) related to the first model, chip information (for example, information about a chip that can run the first model) related to the first model, provider information of the first model, application scenario information of the first model, input parameter information of the first model, output parameter information of the first model, performance information of the first model, or other model running information of the first model. Application scenarios of the first model include but are not limited to energy saving (energy saving), load balancing (load balancing), mobility optimization (mobility optimization), channel state information-reference signal (channel state information-reference signal, CSI-RS) feedback enhancement, beam management enhancement (beam management enhancement, BME), positioning enhancement, and the like. These application scenarios may also be referred to as AI use cases (use cases). The model feature information of the first model is also referred to as first model feature information or the first model. In an example, the model feature information of the first model may be used as a container (container), and mainly includes a model architecture of the first model, at least one model parameter of the first model, and a neuron parameter of at least one model layer of the first model.

For example, the request message further includes indication information, and the indication information indicates that the first model has a usage range. The usage range may be a terminal device that is allowed to be configured with the first model. The indication information is also referred to as privacy requirement information. In a specific example, for example, the indication information indicates that a terminal device of a same manufacturer as the terminal device is allowed to be configured with the first model; or the indication information indicates that a terminal device corresponding to a same chip manufacturer as the terminal device is allowed to be configured with the first model.

Step 302: The model management network element determines configuration restriction information of the first model.

In an implementation method, when the request message includes the indication information, the model management network element determines the configuration restriction information of the first model based on the indication information. In another implementation method, when the request message does not include the indication information, the model management network element determines the configuration restriction information of the first model based on a protocol predefinition.

The configuration restriction information is also referred to as indication information, configuration information, configuration indication information, or the like. The configuration restriction information indicates a terminal device that is allowed to be configured with the first model. For example, the configuration restriction information includes at least one of the following information: information about at least one terminal device, information about at least one terminal device manufacturer, or information about at least one chip manufacturer. The at least one terminal device is allowed to be configured with the first model, and the at least one terminal device includes the terminal device described in step 301. A terminal device produced by the at least one terminal device manufacturer is allowed to configure the first model, and the terminal device produced by the at least one terminal device manufacturer includes the foregoing terminal device. A terminal device that uses a chip produced by the at least one chip manufacturer is allowed to configure the first model, and the terminal device that uses the chip produced by the at least one chip manufacturer includes the foregoing terminal device.

In the foregoing solution, based on a model registration mechanism, the model management network element may obtain the model management information of the first model and maintain the model management information.

For example, in step 302, the model management network element may further allocate model identification information to the first model based on the model management information of the first model, where the model identification information identifies the first model. The model identification information of the first model includes identification information (for example, a model ID) of the first model and/or identification information (for example, a functionality ID) of a model function of the first model. The model function includes at least one of channel state information (channel state information, CSI) feedback enhancement, beam management enhancement, positioning enhancement, or another AI function. In an example, the model identification information may further indicate information about a trainer of the first model and/or running information of the first model. The trainer of the first model is a manufacturer or a device that obtains the first model through training. The information about the trainer of the first model includes one or more of the following information: information about a terminal device manufacturer, information about a chip manufacturer, information about a network device manufacturer, information about an operator, or information about a third-party service device.

In this embodiment of this application, the model identification information of the first model and the model management information of the first model are collectively referred to as model information of the first model. In other words, the model information of the first model includes the model identification information and the model management information.

Step 303: The model management network element sends the configuration restriction information of the first model to the network device. Correspondingly, the network device receives the configuration restriction information of the first model.

For example, the model management network element may further send the model information of the first model to the network device. The model information includes the model identification information and the model management information. After receiving the model information, the network device stores the model information.

If the model management network element further determines the model identification information of the first model in step 302, the model management network element further sends the model identification information of the first model to the network device in step 303. Correspondingly, the network device may establish an association between the model identification information of the first model and the model management information of the first model, and store the model information. The model information includes the model identification information of the first model and the model management information of the first model.

The network device is a network device accessed by the terminal device. It may be understood that, the model management network element may alternatively send at least one of the model identification information, the model management information, and the configuration restriction information to one or more other network devices connected to the model management network element.

Step 304: The network device sends the model identification information of the first model to the terminal device. Correspondingly, the terminal device receives the model identification information of the first model.

For example, if the model management network element updates the model running information and/or the model feature information in the model management information of the first model, the network device may further send updated model management information to the terminal device in step 304.

For example, in step 304, the network device further sends the configuration restriction information of the first model to the terminal device.

Step 305: The terminal device establishes an association between the model identification information and the model management information.

After the terminal device establishes the association between the model identification information of the first model and the model management information of the first model, the terminal device and the network device may subsequently manage the first model based on the model identification information of the first model. For example, when the network device needs to indicate the terminal device to activate the first model, the network device may send the model identification information of the first model to the terminal device, or send the model identification information of the first model and an activation indication, and the terminal device determines the model management information of the first model based on the model identification information of the first model. The model management information of the first model includes the model running information of the first model and the model feature information of the first model. Then, the first model is activated based on the model feature information of the first model, or the first model is activated based on the model running information of the first model and the model feature information of the first model. Similarly, the terminal device may also deactivate the first model by using a similar method. Details are not described again.

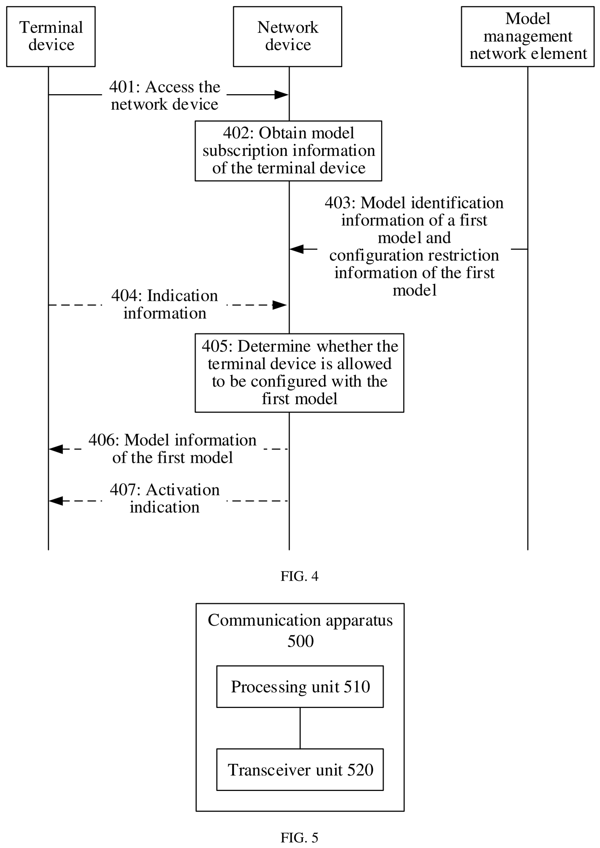

In an implementation, when another terminal device accesses the network device, for a UE-sided model and a two-sided model, the network device may determine, based on the configuration restriction information of the first model, whether to configure the first model for the another terminal device. For example, for the UE-sided model and the two-sided model, if the another terminal device is the terminal device indicated by the configuration restriction information of the first model, the network device may configure the first model for the another terminal device, and the network device may send the model information of the first model to the another terminal device. The another terminal device deploys the first model based on the model information of the first model. For specific descriptions, refer to descriptions in the embodiment corresponding to FIG. 4.

In an implementation, for an NW-sided model, the network device may determine, based on the configuration restriction information of the first model, whether to activate the first model when communicating with the another terminal device. For example, if the another terminal device is the terminal device indicated by the configuration restriction information of the first model, the first model may be activated when the network device communicates with the another terminal device.

In the foregoing solution, the introduction of the configuration restriction information of the model allows model configuration or model usage on the terminal device corresponding to the configuration restriction information, thereby ensuring security and privacy of the model.

FIG. 4 is a schematic flowchart of a communication method according to an embodiment of this application. The method includes the following steps.

Step 401: A terminal device accesses a network device.

Step 402: The network device obtains model subscription information of the terminal device.

The model subscription information indicates a model that is allowed to be configured for the terminal device. In an implementation method, the model subscription information includes at least one of the following information: information about a terminal device manufacturer, information about a chip manufacturer, information about a model available to the terminal device, or information about a model that the terminal device supports. For example, assuming that the model subscription information includes the information about the terminal device manufacturer, all models trained by the manufacturer indicated by the information about the terminal device manufacturer may be configured for the terminal device.

The information about the model available to the terminal device may be understood as an indication of a model that the terminal device has permission to use or a model that can be used by the terminal device within a permission scope of the terminal device. The information about the model available to the terminal device may include identification information of at least one model. Alternatively, the information about the model available to the terminal device may indicate information about a terminal device manufacturer and/or information about a chip manufacturer. The information about the model available to the terminal device indicates the information about the terminal device manufacturer. This indicates that the terminal device has permission to use a model trained by the terminal device manufacturer. The information about the model available to the terminal device indicates the information about the chip manufacturer. This indicates that the terminal device has permission to use a model trained by the chip manufacturer.

The information about the model that the terminal device supports may be understood as an indication of a model that can be used by the terminal device within a capability range of the terminal device. The information about the model that the terminal device supports may include identification information of at least one model that can be used by the terminal device within the capability range of the terminal device. Alternatively, the information about the model that the terminal device supports may indicate information about a terminal device manufacturer and/or information about a chip manufacturer. The information about the model that the terminal device supports indicates the information about the terminal device manufacturer. This indicates that the terminal device may use, within the capability range of the terminal device, a model trained by the terminal device manufacturer. The information about the model that the terminal device supports indicates the information about the chip manufacturer. This indicates that the terminal device may use, within the capability range of the terminal device, a model trained by the chip manufacturer.

With reference to a specific example, the following describes a relationship and a difference between the information about the model available to the terminal device and the information about the model that the terminal device supports. It is assumed that terminal device manufacturers include a manufacturer 1, a manufacturer 2, and a manufacturer 3. Models provided by the manufacturer 1 include a model 1-1, a model 1-2, and a model 1-3. Models provided by the manufacturer 2 may include a model 2-1 and a model 2-2. A model provided by the manufacturer 3 may include a model 3-1. The model 1-1, the model 1-2, the model 2-1, and the model 3-1 may be referred to as low-capability models, and a capability of a terminal device required for configuring these models is low. The model 1-3 and the model 2-2 may be referred to as high-capability models, and a capability of a terminal device required for configuring these models is high. In an example, the information about the model available to the terminal device includes information about the manufacturer 1 and information about the manufacturer 2. This indicates that the terminal device has permission to use models trained by the manufacturer 1 and the manufacturer 2. For example, the terminal device has permission to use at least one of the model 1-1, the model 1-2, the model 1-3, the model 2-1, and the model 2-2. It may be understood that, whether at least one of the foregoing models can be configured for the terminal device is further determined with reference to capability information of the terminal device and/or the information about the model that the terminal device supports. Assuming that the capability of the terminal device is low, the terminal device may configure at least one of the model 1-1 trained by the manufacturer 1, the model 1-2 trained by the manufacturer 1, and the model 2-1 trained by the manufacturer 2. In another example, still assuming that the capability of the terminal device is low, it may be determined, based on, that models that can be configured within the capability range of the terminal device include the model 1-1, the model 1-2, the model 2-1, and the model 3-1. Because the information about the model that the terminal device supports includes the information about the manufacturer 1 and the information about the manufacturer 2, indicating that the terminal device supports using models that are trained by the manufacturer 1 and the manufacturer 2 and that have a low requirement on the capability of the terminal device, the terminal device may use, within the capability range of the terminal device, at least one of the model 1-1 trained by the manufacturer 1, the model 1-2 trained by the manufacturer 1, and the model 2-1 trained by the manufacturer 2.

In an implementation method, the network device may receive the model subscription information sent by the terminal device, or may receive the model subscription information that is of the terminal device and that is sent by another network device. For example, when the network device is an access network device, the access network device may receive the model subscription information of the terminal device from a core network device or another access network device.

Step 403: A model management network element sends model information of a first model and configuration restriction information of the first model to the network device. Correspondingly, the network device receives the model information of the first model and the configuration restriction information of the first model.

For specific meanings of the model information and the configuration restriction information, refer to the descriptions of the embodiment in FIG. 3.

A specific implementation method for obtaining model identification information of the first model and the configuration restriction information of the first model by the model management network element may be the same as the method in the embodiment in FIG. 3. Details are not described again.

The model information and the configuration restriction information may be sent in a same message, or may be separately sent in different messages.

It should be noted that, an execution sequence of step 403, step 401, and step 402 is not limited.

Step 404: The terminal device sends indication information to the network device. Correspondingly, the network device receives the indication information.

The indication information indicates that the terminal device has been configured with the first model and/or a state of the first model, and the state is an active state or an inactive state; or the indication information indicates that the terminal device has not been configured with the first model. The active state means that the first model has been deployed and activated, and a model deployment device (the network device and/or the terminal device) may use the first model to perform data processing or analysis. The inactive state means that the first model has been deployed but has not been activated, and the model deployment device cannot use the first model to perform data processing or analysis.

Step 404 is an optional step.

It may be understood that in step 402, if the network device receives the model subscription information sent by the terminal device, in an implementation, step 404 and step 402 may be combined. For example, the terminal device may send the model subscription information and the indication information to the network device in a same message.

Step 405: The network device determines, based on the model subscription information and the configuration restriction information, whether the terminal device is allowed to be configured with the first model.

When a terminal device indicated by the configuration restriction information includes the terminal device, and the model indicated by the model subscription information includes the first model, it is determined that the terminal device is allowed to be configured with the first model. When the terminal device indicated by the configuration restriction information does not include the terminal device, or the model indicated by the model subscription information does not include the first model, it is determined that the terminal device is not allowed to configure the first model.

In an implementation, when it is determined that the terminal device is allowed to be configured with the first model, if the indication information in step 404 indicates that the terminal device has not been configured with the first model, the following step 406 is performed, or the following step 406 and step 407 are performed; or if the indication information indicates that the terminal device has been configured with the first model and the first model is in the inactive state, the following step 407 is performed.

Step 406: The network device sends the model information of the first model to the terminal device. Correspondingly, the terminal device receives the model information of the first model.

The first model is configured for the terminal device based on the model information of the first model.

Step 407: The network device sends an activation indication to the terminal device. Correspondingly, the terminal device receives the activation indication.

The activation indication indicates to activate the first model.

In an implementation, when the indication information in step 404 indicates that the terminal device has not been configured with the first model, and it is determined in step 405 that the terminal device is allowed to be configured with the first model, step 406 and step 407 may be combined for execution as step 406', to be specific, the network device sends the model information of the first model and the activation indication to the terminal device. In this implementation, the activation indication may indicate whether to activate the first model.

In another implementation, when the indication information in step 404 indicates that the terminal device has not been configured with the first model, and it is determined in step 405 that the terminal device is allowed to be configured with the first model, if step 406 is performed after step 405 but step 407 is not performed, the first model is configured for the terminal device after the terminal device receives the model information of the first model, and the terminal device activates or deactivates the first model based on a protocol predefinition.

It should be noted that, in an implementation, step 404 may alternatively be step 404'. Specifically, the network device may learn, in another manner, whether the terminal device has deployed the first model and a state of the first model when the first model has been deployed. For example, the network device learns of the foregoing information from the another network device.

In the foregoing solution, the introduction of the configuration restriction information of the model allows model configuration or model usage on a terminal device corresponding to the configuration restriction information, thereby ensuring security and privacy of the model.

It should be noted that, in the embodiments in FIG. 3 and FIG. 4, an example in which the model management network element and the network device are different network elements is used for description, that is, a deployment position of a network element having a model management function is not on the network device. In another implementation method, if the model management network element and the network device are a same device, that is, the model management function is deployed on the network device, operations performed by the model management network element in the embodiments in FIG. 3 and FIG. 4 may be performed by the network device. For example, for the embodiment in FIG. 3, the request message in step 301 may be sent to the network device, step 302 is performed by the network device, and step 303 is an operation between different functional modules in the network device, or step 303 may not be performed. For the embodiment in FIG. 4, step 403 is an operation between different functional modules in the network device, or step 403 may not be performed.

In an implementation method, the embodiment in FIG. 3 and the embodiment in FIG. 4 may be combined for implementation. For example, the network device in the embodiment in FIG. 4 and the network device in the embodiment in FIG. 3 are a same network device, the model management network element in the embodiment in FIG. 4 and the model management network element in the embodiment in FIG. 3 are a same model management network element, and the terminal device in the embodiment in FIG. 4 and the terminal device in the embodiment in FIG. 3 are different terminal devices. In this case, step 403 in the embodiment in FIG. 4 and step 303 in the embodiment in FIG. 3 may be a same step.

It may be understood that, in embodiments of this application, the terminal device, the network device, or the model management network element may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application are performed.

It may be understood that, to implement functions in the foregoing embodiments, the network device, the model management network element, or the terminal device includes corresponding hardware structures and/or software modules for performing the functions. A person skilled in the art should be easily aware that, in this application, units and method steps described in examples with reference to embodiments disclosed in this application can be implemented in a form of hardware or a combination of hardware and computer software. Whether a specific function is performed by hardware or hardware driven by computer software depends on particular application scenarios and design constraints of the technical solutions.

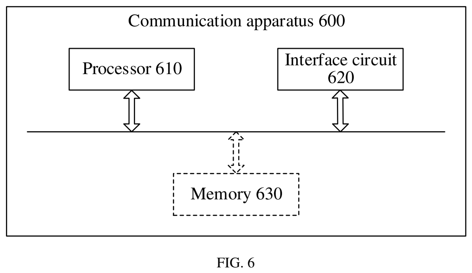

FIG. 5 and FIG. 6 are diagrams of structures of possible communication apparatuses according to embodiments of this application. These communication apparatuses may be configured to implement a function of the network device, the model management network element, or the terminal device in the foregoing method embodiments, and therefore can also achieve beneficial effects of the foregoing method embodiments. In embodiments of this application, the communication apparatus may be a network device, a model management network element, or a terminal device, or may be a module (for example, a chip) used in the network device, the model management network element, or the terminal device.

The communication apparatus 500 shown in FIG. 5 includes a processing unit 510 and a transceiver unit 520. The communication apparatus 500 is configured to implement a function of the network device, the model management network element, or the terminal device in the foregoing method embodiments.

When the communication apparatus 500 is configured to implement the function of the network device in the foregoing embodiments, the processing unit 510 is configured to: obtain model subscription information of a terminal device and configuration restriction information of a first model, where the model subscription information indicates a model that is allowed to be configured for the terminal device, the configuration restriction information indicates a terminal device that is allowed to be configured with the first model, and the first model is an AI model; and determine, based on the model subscription information and the configuration restriction information, whether the terminal device is allowed to be configured with the first model.

In a possible implementation method, that the processing unit 510 is configured to determine, based on the model subscription information and the configuration restriction information, whether the terminal device is allowed to be configured with the first model specifically includes: When the terminal device indicated by the configuration restriction information includes the terminal device, and the model indicated by the model subscription information includes the first model, determining that the terminal device is allowed to be configured with the first model.

In a possible implementation method, the transceiver unit 520 is configured to receive indication information from the terminal device, where the indication information indicates that the terminal device has been configured with the first model and/or a state of the first model, and the state is an active state or an inactive state; or the indication information indicates that the terminal device has not been configured with the first model.

In a possible implementation method, the transceiver unit 520 is further configured to: when the terminal device is allowed to be configured with the first model and the terminal device has not been configured with the first model, send model information of the first model to the terminal device.

In a possible implementation method, the model information includes model identification information and model management information. The model identification information includes identification information of the first model and/or identification information of a model function of the first model; and the model management information includes model running information of the first model and/or model feature information of the first model.

In a possible implementation method, the transceiver unit 520 is further configured to: when the terminal device is allowed to be configured with the first model, and the terminal device has been configured with the first model but has not activated the first model, send an activation indication to the terminal device, where the activation indication indicates to activate the first model.

In a possible implementation method, the configuration restriction information includes at least one of the following information: information about at least one terminal device, information about at least one terminal device manufacturer, or information about at least one chip manufacturer.

When the communication apparatus 500 is configured to implement the function of the model management network element in the foregoing embodiments, the transceiver unit 520 is configured to: receive a request message from a terminal device, where the request message is for requesting to register a first model with the model management network element, and the first model is an AI model; and send configuration restriction information of the first model to a network device, where the configuration restriction information indicates a terminal device that is allowed to be configured with the first model.

In a possible implementation method, the processing unit 510 is configured to determine the configuration restriction information.

In a possible implementation method, the request message includes indication information, and the indication information indicates that the first model has a usage range; and that the processing unit 510 is configured to determine the configuration restriction information specifically includes: determining the configuration restriction information based on the indication information.

In a possible implementation method, the processing unit 510 is further configured to generate, for the first model, model identification information of the first model, where the model identification information identifies the first model.

In a possible implementation method, the transceiver unit 520 is further configured to send the model identification information to the network device.

In a possible implementation method, the model identification information includes identification information of the first model and/or identification information of a model function of the first model.

In a possible implementation method, the request message includes model management information of the first model, and the model management information includes model running information of the first model and/or model feature information of the first model.

In a possible implementation method, the configuration restriction information includes at least one of the following information: information about at least one terminal device, information about at least one terminal device manufacturer, or information about at least one chip manufacturer.

When the communication apparatus 500 is configured to implement the function of the terminal device in the foregoing embodiments, the transceiver unit 520 is configured to: send a request message to a model management network element, where the request message is for requesting to register a first model with the model management network element, and the first model is an AI model; and receive model identification information of the first model from the model management network element, where the model identification information identifies the first model.

In a possible implementation method, the processing unit 510 is configured to establish an association between the model identification information and model management information of the first model.

In a possible implementation method, the request message includes the model management information.

In a possible implementation method, the model management information includes model running information of the first model and/or model feature information of the first model.

In a possible implementation method, the model identification information includes identification information of the first model and/or identification information of a model function of the first model.

In a possible implementation method, the request message includes indication information, and the indication information indicates that the first model has a usage range.

In a possible implementation method, the indication information indicates that a terminal device of a same manufacturer as the terminal device is allowed to be configured with the first model; or the indication information indicates that a terminal device corresponding to a same chip manufacturer as the terminal device is allowed to be configured with the first model.

In a possible implementation method, the configuration restriction information includes at least one of the following information: information about at least one terminal device, information about at least one terminal device manufacturer, or information about at least one chip manufacturer.

For more detailed descriptions of the processing unit 510 and the transceiver unit 520, directly refer to related descriptions in the foregoing method embodiments. Details are not described herein again.

The communication apparatus 600 shown in FIG. 6 includes a processor 610 and an interface circuit 620. The processor 610 and the interface circuit 620 are coupled to each other. It may be understood that, the interface circuit 620 may be a transceiver or an input/output interface. For example, the communication apparatus 600 may further include a memory 630 configured to store instructions executed by the processor 610, store input data required by the processor 610 to run the instructions, or store data generated after the processor 610 runs the instructions.

When the communication apparatus 600 is configured to implement the foregoing method embodiments, the processor 610 is configured to implement a function of the foregoing processing unit 510, and the interface circuit 620 is configured to implement a function of the foregoing transceiver unit 520.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, and the information is sent by a network device to the terminal device. Alternatively, the chip in the terminal device sends information to another module (for example, a radio frequency module or an antenna) in the terminal device, and the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, and the information is sent by a terminal device to the network device. Alternatively, the module in the network device sends information to another module (for example, a radio frequency module or an antenna) in the network device, and the information is sent by the network device to a terminal device. The module in the network device herein may be a baseband chip in the network device, or may be a DU or another module. The DU herein may be a DU in an open radio access network (open radio access network, O-RAN) architecture.

It can be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

Method steps in embodiments of this application may be implemented in a hardware manner, or may be implemented by a processor by executing software instructions. The software instructions may be constituted by corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, and a compact disk read-only memory (compact disc read-only memory, CD-ROM) or any other form of storage medium well known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device, a model management network element, or a terminal device. Certainly, the processor and the storage medium may alternatively exist in a network device, a model management network element, or a terminal device as discrete components.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer programs or instructions. A computer program (Computer Program) is a group of instructions that instruct each step of an electronic computer or another device having a message processing capability, is usually written in a programming language, and runs on a target architecture. When the computer programs or the instructions are loaded and executed on a computer, all or a part of procedures or functions in embodiments of this application are performed. The computer may be a general-purpose computer, a dedicated computer, a computer network, a network device, a terminal device, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

The protocol described in this application may be a communication protocol or a specification, for example, a 3GPP communication protocol.

In embodiments of this application, unless otherwise specified or there is a logical conflict, terms and/or descriptions in different embodiments are consistent and may be mutually referenced. Technical features in different embodiments may be combined based on an internal logical relationship thereof, to form a new embodiment. In this application, "at least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. In a formula in this application, the character "/" indicates a "division" relationship between associated objects.

It may be understood that, various numbers in embodiments of this application are merely used for differentiation for ease of description, but are not used for limiting the scope of embodiments of this application. Sequence numbers of the foregoing processes do not mean execution sequences. The execution sequences of the processes should be determined based on functions and internal logic of the processes.

**Claims**

1. A communication method, applied to a network device, wherein the method comprises:

    obtaining model subscription information of a terminal device and configuration restriction information of a first model, wherein the model subscription information indicates a model that is allowed to be configured for the terminal device, the configuration restriction information indicates a terminal device that is allowed to be configured with the first model, and the first model is an artificial intelligence AI model; and determining, based on the model subscription information and the configuration restriction information, whether the terminal device is allowed to be configured with the first model.

2. The method according to claim 1, wherein the determining, based on the model subscription information and the configuration restriction information, whether the terminal device is allowed to be configured with the first model comprises:
    when the terminal device indicated by the configuration restriction information comprises the terminal device, and the model indicated by the model subscription information comprises the first model, determining that the terminal device is allowed to be configured with the first model.

3. The method according to claim 1 or 2, wherein the method further comprises:

    receiving indication information from the terminal device, wherein
    the indication information indicates that the terminal device has been configured with the first model and/or a state of the first model, and the state is an active state or an inactive state; or the indication information indicates that the terminal device has not been configured with the first model.

4. The method according to claim 3, wherein the method further comprises:
    when the terminal device is allowed to be configured with the first model and the terminal device has not been configured with the first model, sending model information of the first model to the terminal device.

5. The method according to claim 4, wherein the model information comprises model identification information and model management information; and
    the model identification information comprises identification information of the first model and/or identification information of a model function of the first model; and the model management information comprises model running information of the first model and/or model feature information of the first model.

6. The method according to claim 3, wherein the method further comprises:
    when the terminal device is allowed to be configured with the first model, and the terminal device has been configured with the first model but has not activated the first model, sending an activation indication to the terminal device, wherein the activation indication indicates to activate the first model.

7. The method according to any one of claims 1 to 6, wherein the configuration restriction information comprises at least one of the following information: information about at least one terminal device, information about at least one terminal device manufacturer, or information about at least one chip manufacturer.

8. A communication method, applied to a model management network element, wherein the method comprises:

    receiving a request message from a terminal device, wherein the request message is for requesting to register a first model with the model management network element, and the first model is an artificial intelligence AI model; and sending configuration restriction information of the first model to a network device, wherein the configuration restriction information indicates a terminal device that is allowed to be configured with the first model.

9. The method according to claim 8, wherein the method further comprises:
    determining the configuration restriction information.

**10.** The method according to claim 9, wherein the request message comprises indication information, and the indication information indicates that the first model has a usage range; and
determining the configuration restriction information comprises:
determining the configuration restriction information based on the indication information.

**11.** The method according to any one of claims 8 to 10, wherein the method further comprises:
generating, for the first model, model identification information of the first model, wherein the model identification information identifies the first model.

**12.** The method according to claim 11, wherein the method further comprises:
sending the model identification information to the network device.

**13.** The method according to claim 11 or 12, wherein the model identification information comprises identification information of the first model and/or identification information of a model function of the first model.

**14.** The method according to any one of claims 8 to 13, wherein the request message comprises model management information of the first model, and the model management information comprises model running information of the first model and/or model feature information of the first model.

**15.** The method according to any one of claims 8 to 14, wherein the configuration restriction information comprises at least one of the following information: information about at least one terminal device, information about at least one terminal device manufacturer, or information about at least one chip manufacturer.

**16.** A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus; and the processor is configured to implement the method according to any one of claims 1 to 7 or configured to implement the method according to any one of claims 8 to 15 by using a logic circuit or by executing code instructions.

**17.** A communication apparatus, comprising a unit configured to implement the method according to any one of claims 1 to 7 or configured to the method according to any one of claims 8 to 15.

**18.** A computer-readable storage medium, wherein the storage medium stores a computer program or instructions; and when the computer program or the instructions are executed by a communication apparatus, the method according to any one of claims 1 to 7 is implemented, or the method according to any one of claims 8 to 15 is implemented.

**19.** A communication system, comprising a network device configured to perform the method according to any one of claims 1 to 7 and a model management network element configured to perform the method according to any one of claims 8 to 15.

FIG. 1(a)

FIG. 1(b)

FIG. 1(c)

$$y = f\left(\sum_{i=0}^{n} w_i x_i + b\right)$$

Neuron

FIG. 2(a)

Neuron    Layer

Weight

Input layer

Hidden layer

Output layer

FIG. 2(b)

FIG. 3

| Terminal device | Network device | Model management network element |
|---|---|---|

401: Access the network device

402: Obtain model subscription information of the terminal device

403: Model identification information of a first model and configuration restriction information of the first model

404: Indication information

405: Determine whether the terminal device is allowed to be configured with the first model

406: Model information of the first model

407: Activation indication

FIG. 4

Communication apparatus 500

Processing unit 510

Transceiver unit 520

FIG. 5

EP 4 657 907 A1

Communication apparatus 600

Processor 610

Interface circuit 620

Memory 630

FIG. 6

## EP 4 657 907 A1

| INTERNATIONAL SEARCH REPORT | International application No. |
| --- | --- |
| | **PCT/CN2023/135611** |

**A. CLASSIFICATION OF SUBJECT MATTER**

H04W 12/02(2009.01)i

According to International Patent Classification (IPC) or to both national classification and IPC

**B. FIELDS SEARCHED**

Minimum documentation searched (classification system followed by classification symbols)

IPC:H04W12/-; H04W16/-; G06F21/-

Documentation searched other than minimum documentation to the extent that such documents are included in the fields searched

Electronic data base consulted during the international search (name of data base and, where practicable, search terms used)

CNABS, CNTXT, CNKI, 万方, WANFANG, VEN, ENTXT, 3GPP, IEEE: 人工智能模型, AI模型, 机器学习模型, ML模型, 允许, 权限, 限制, 隐私, 使用, 操作, 配置, artificial intelligence model, AI model, machine learning model, ML model, allowed, restrict+, authority, limit+, privacy, use, operat+, configurat+.

**C. DOCUMENTS CONSIDERED TO BE RELEVANT**

| Category* | Citation of document, with indication, where appropriate, of the relevant passages | Relevant to claim No. |
| --- | --- | --- |
| Y | CN 115699842 A (GUANGDONG OPPO MOBILE COMMUNICATIONS CO., LTD.) 03 February 2023 (2023-02-03) description, paragraphs 0059-0209 | 8-18 |
| Y | CN 111222181 A (ALPHA CLOUD COMPUTING (SHENZHEN) CO., LTD.) 02 June 2020 (2020-06-02) description, paragraphs 0061-0074 | 8-18 |
| A | CN 112416575 A (ZHONGGUANCUN SCIENCE CITY URBAN BRAIN CO., LTD.) 26 February 2021 (2021-02-26) entire document | 1-19 |
| A | CN 114143799 A (HUAWEI TECHNOLOGIES CO., LTD.) 04 March 2022 (2022-03-04) entire document | 1-19 |
| A | CN 114787793 A (GUANGDONG OPPO MOBILE COMMUNICATIONS CO., LTD.) 22 July 2022 (2022-07-22) entire document | 1-19 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 January 2024** | **02 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/135611**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022082356 A1 (HUAWEI TECHNOLOGIES CO., LTD.) 28 April 2022 (2022-04-28) entire document | 1-19 |

Form PCT/ISA/210 (second sheet) (July 2022)

**INTERNATIONAL SEARCH REPORT**
Information on patent family members

| | International application No. |
| --- | --- |
| | **PCT/CN2023/135611** |

| Patent document cited in search report | | | Publication date (day/month/year) | Patent family member(s) | | | Publication date (day/month/year) |
| --- | --- | --- | --- | --- | --- | --- | --- |
| CN | 115699842 | A | 03 February 2023 | WO | 2022021421 | A1 | 03 February 2022 |
| CN | 111222181 | A | 02 June 2020 | CN | 111222181 | A | 02 June 2020 |
| CN | 112416575 | A | 26 February 2021 | | None | | |
| CN | 114143799 | A | 04 March 2022 | | None | | |
| CN | 114787793 | A | 22 July 2022 | WO | 2021163895 | A1 | 26 August 2021 |
| WO | 2022082356 | A1 | 28 April 2022 | | None | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310159238